# EUROPÄISCHE PATENTSCHRIFT

(11) **EP 2 327 645 B1**
(45) Veröffentlichungstag und Bekanntmachung des Hinweises auf die Patenterteilung: **29.08.2012**
(21) Anmeldenummer: 10186586.3
(22) Anmeldetag: 05.10.2010
(51) Int. Cl.: B65G 1/137

(54) **Vorrichtung und Verfahren zum teilweise oder vollständig automatischen Kommissionieren von Gebinden**
Device and method for the partially or completely automatic picking of containers
Dispositif et procédé de commissionnement automatique partiel ou total de gerbes

(30) Priorität: 26.11.2009 DE 102009047187
(43) Veröffentlichungstag der Anmeldung: 01.06.2011
(73) Patentinhaber: Krones AG, 93073 Neutraubling (DE)
(72) Erfinder: Hirschbichler, Martin, 83059, Kolbermoor (DE); Holzner, Robert, 80999, München (DE)
(74) Vertreter: Grünecker, Kinkeldey, Stockmair & Schwanhäusser

(56) Entgegenhaltungen:
- EP-A1- 1 447 355
- DE-A1- 2 340 149

## Beschreibung

Die Erfindung betrifft eine Vorrichtung und ein Verfahren zum teilweise oder vollständig automatischen Kommissionieren von Gebinden eines oder mehrerer Artikel, insbesondere Getränkeartikel.

Insbesondere in der Getränkeindustrie werden häufig Gebinde eines oder mehrerer Artikel kundenspezifisch auf einem Träger, beispielsweise einer Palette, kommissioniert. Dazu ist es erforderlich, Verbände von Gebinden, insbesondere Paletten, zu teilen und die Gebinde einem Gebindespeicher zuzuführen. Die im Gebindespeicher gelagerten Gebinde können daraufhin zur Bildung einer Zieleinheit, d. h. zur Kommissionierung der Gebinde auf einem Zielträger, verwendet werden. Dieser Vorgang wird als Kommissionierung bezeichnet und kann vollständig manuell, vollständig automatisiert oder teilweise manuell und teilweise automatisiert durchgeführt werden.

Für die Automatisierung der Übertragung von Gebinden bzw. von Verbänden von Gebinden eines oder mehrerer unterschiedlicher Artikel auf die Zieleinheit werden unterschiedliche Verfahren und unterschiedliche Technologien verwendet. Die Automatisierung von Kommissionierprozessen ist dabei häufig im Spannungsfeld von Investitionskosten und Kommissionierleistung.

Es sind Situationen denkbar, in denen eine Vielzahl der zu bearbeitenden Kommissionieraufträge einen hohen Anteil von einigen speziellen Artikeln aufweisen. Dies kann beispielsweise der Fall sein, wenn ein Anbieter einige sehr verkaufsstarke Artikel anbietet. In diesem Fall besteht der Kommissionierprozess im Wesentlichen darin, Gebinde von einem bereitgestellten Verband von Gebinden zu entnehmen und in großer Menge wieder auf einer Zieleinheit anzuordnen. Eine solche Umordnung von Gebinden ist im Sinne der Kommissionierleistung nicht wünschenswert.

Ein Verfahren gemäß dem Oberbegriff des Anspruchs 1 ist aus der DE-A1-2340149 bekannt.

Daher ist es Aufgabe der vorliegenden Erfindung ein Verfahren zum teilweise oder vollständig automatischen Kommissionieren von Gebinden eines oder mehrerer Artikel, insbesondere Getränkeartikel, bereitzustellen, welche eine gesteigerte Kommissionierleistung, insbesondere für das Kommissionieren von Gebinden von verkaufsstarken Artikeln, ermöglichen. Diese Aufgabe wird gelöst durch den Gegenstand des Patentanspruchs1.

Das erfindungsgemäße Verfahren zum teilweise oder vollständig automatischen Kommissionieren von Gebinden eines oder mehrerer Artikel, insbesondere Getränkeartikel, umfasst die Schritte: Empfangen eines Kommissionierauftrages zum Erstellen einer Zieleinheit, die einen Zielträger und Zielgebinde eines oder mehrerer Artikel umfasst, Bereitstellen einer Quelleinheit, die einen Quellträger und Quellgebinde eines vorherbestimmten Artikels umfasst, basierend auf dem Kommissionierauftrag, automatisches Bestimmen, ob die Quelleinheit zum negativen Kommissionieren geeignet ist und, wenn die Quelleinheit zum negativen Kommissionieren geeignete ist, Verwenden der Quelleinheit als Zieleinheit, umfassend negatives Kommissionieren der Quelleinheit.

Als negatives Kommissionieren oder Negativkommissionierung wird ein Verfahren bezeichnet, bei dem die Quelleinheit depalettiert oder entladen wird, sodass die Anzahl der auf der Quelleinheit verbleibenden Gebinde eines vorherbestimmten Artikels der Bestellmenge der Gebinde des vorherbestimmten Artikels gemäß eines Kommissionierauftrages entspricht. Die derart abkommissionierte Quelleinheit wird in Folge als Zieleinheit verwendet. Mit anderen Worten wird der Träger der Quelleinheit als Zielträger und die nach dem Entnehmen der Gebinde verbleibenden Quellgebinde als Zielgebinde verwendet. Gegebenenfalls können in Folge noch weitere Gebinde unterschiedlicher Artikel auf der Zieleinheit, insbesondere auf dem Zielträger, angeordnet werden.

Dadurch, dass automatisch bestimmt wird, ob eine Quelleinheit zum negativen Kommissionieren geeignet ist und, sollte dies der Fall sein, die Quelleinheit als Zieleinheit verwendet wird, ist eine gesteigerte Kommissionierleistung möglich. Sollte eine Quelleinheit zum negativen Kommissionieren geeignet sein, ist es, da die Quelleinheit als Zieleinheit verwendet wird, in diesem Fall nicht notwendig, die Gebinde des vorherbestimmten Artikels physisch, im Einzelnen oder in Verbänden, auf eine Zieleinheit zu übertragen.

Der Träger der Quelleinheit und/oder der Zieleinheit kann insbesondere eine Palette, ein Trolley, eine Gitterbox oder ein beliebiger anderer Behälter sein.

Die Zieleinheit kann ein Verband aus mehreren unterschiedlichen Gebinden sein, insbesondere eine gemischte Palette, welcher durch Vorgaben von einem oder mehreren Kundenaufträgen oder durch Vorgaben von einem oder mehreren Aufträgen zur Unterstützung weiterer interner wie externer Geschäftsprozesse, insbesondere Verteilen, Montieren, Umpacken, Konfektionieren, Kommissionieren, etc., erstellt wird.

Die Quelleinheit kann artikelrein sein. Mit anderen Worten kann die Quelleinheit Gebinde von genau einem Artikel, beispielsweise genau einem Getränkeartikel, umfassen.

Ein Gebinde kann der Gesamtheit aus Packgut und Verpackung entsprechen. Insbesondere kann ein Gebinde eines Getränkeartikels einem Getränk und der dazugehörigen Verpackung entsprechen. Ein Gebinde kann auch einem Großgebinde entsprechen, wobei ein Großgebinde eine Mehrzahl von Einzelgebinden umfasst. Beispielsweise kann es bei einem Gebinde um eine Getränkekiste mit Flaschen, die mit einem Getränk gefüllt sind; handeln. Eine Gebinde kann auch ein Karton oder ein Shrinkpack sein.

Eine Quelleinheit kann zum negativen Kommissionieren geeignet sein, wenn gemäß des Kommissionierauftrages mehr Gebinde des vorherbestimmten Artikels von der Quelleinheit entnommen werden müssten, als nach der Entnahme auf der Quelleinheit verbleiben würden.

Das automatische Bestimmen kann ein automatisches Bestimmen einer Restmenge umfassen, wobei die Restmenge der zahlenmäßigen Differenz zwischen der Anzahl der Quellgebinde auf der Quelleinheit und der durch den Kommissionierauftrag bestellten Anzahl an Gebinden des vorherbestimmten Artikels entsprechen.

In diesem Fall kann die Quelleinheit zum negativen Kommissionieren geeignet sein, wenn die Restmenge kleiner ist als ein vorherbestimmter Bruchteil der Anzahl der Quellgebinde der Quelleinheit. Mit anderen Worten kann das automatische Bestimmen ein automatisches Bestimmen, ob die Restmenge kleiner ist als ein vorherbestimmter Bruchteil der Anzahl der Quellgebinde der Quelleinheit, umfassen. Der vorherbestimmte Bruchteil kann insbesondere ein Halb (1/2) oder ein Drittel (1/3) sein.

Alternativ kann das automatische Bestimmen auch ein automatisches Bestimmen, ob die durch die Kommissionierauftrag bestellte Anzahl an Gebinden des vorherbestimmten Artikels größer ist als ein vorherbestimmter Bruchteil, insbesondere größer als die Hälfte oder zwei Drittel der Quellgebinde der Quelleinheit, umfassen.

Das Verwenden der Quelleinheit als Zieleinheit kann insbesondere ein Entnehmen der Restmenge an Quellgebinden von der Quelleinheit und ein Verwenden des Quellträgers als Zielträger und Verwenden der nach dem Entnehmen der Restmenge verbleibenden Quellgebinde als Zielgebinde umfassen.

Es können mehrere Kommissionieraufträge oder Kommissionieraufgaben empfangen werden, wobei der Schritt des automatischen Bestimmens für jeden Kommissionierauftrag durchgeführt wird. Die mehreren empfangenen Kommissionieraufträge können einem vorherbestimmten Zeitraum zugeordnet sein. Mit anderen Worten kann den mehreren empfangenen Kommissionieraufträgen ein vorherbestimmter Zeitraum zugeordnet sein, in welchem die Kommissionieraufträge abgearbeitet werden müssen.

Das Empfangen eines oder mehrerer Kommissionieraufträge kann ein Speichern des einen oder der mehreren Kommissionieraufträge umfassen. Ein Kommissionierauftrag kann eine Angabe der bestellten Menge an Gebinden von einem oder mehreren Artikeln umfassen. Ein Kommissionierauftrag kann auch einen oder mehrere Teilaufträge umfassen.

Das Verfahren kann außerdem ein Bestimmen des Kommissionierauftrags mit der kleinsten Restmenge für die Quelleinheit umfassen, insbesondere wobei die Quelleinheit für den Kommissionierauftrag mit der kleinsten Restmenge als Zieleinheit verwendet wird. Mit anderen Worten kann das Verfahren umfassen, dass, basierend auf jedem der Kommissionieraufträge, bestimmt wird, ob eine Quelleinheit zum negativen Kommissionieren geeignet ist, und dass, wenn die Quelleinheit zum negativen Kommissionieren geeignet ist, die Quelleinheit für denjenigen Kommissionierauftrag mit der kleinsten Restmenge als Zieleinheit verwendet wird.

Es können auch mehrere Quelleinheiten bereitgestellt werden, wobei der Schritt des automatischen Bestimmens für jede Quelleinheit durchgeführt wird. Insbesondere kann der Schritt des automatischen Bestimmens für jede Quelleinheit und jeden Kommissionierauftrag durchgeführt werden. Damit kann der gesamte Kommissionierprozess optimiert werden.

Die eine oder mehrere Quelleinheiten können in einem externen Lager oder auf einer Bereitstellfläche einer Kommissioniervorrichtung bereitgestellt werden.

Wenn für einen Kommissionierauftrag mehrere Quelleinheiten zum negativen Kommissionieren geeignet sind, kann jene Quelleinheit für den Kommissionierauftrag als Zieleinheit verwendet werden, die für den Kommissionierauftrag die kleinste Restmenge aufweist.

Alternativ oder zusätzlich zur kleinsten Restmenge kann auch ein zweites vorherbestimmtes Kriterium verwendet werden, um, wenn für einen Kommissionierauftrag mehrere Quelleinheiten zum negativen Kommissionieren geeignet sind, eine Quelleinheit auszuwählen. Mit anderen Worten kann jene Quelleinheit für den Kommissionierauftrag als Zieleinheit verwendet werden, die für den Kommissionierauftrag die kleinste Restmenge aufweist und/oder die das zweite vorherbestimmte Kriterium erfüllt.

Mit anderen Worten stellt die Erfindung ein Verfahren zum teilweise oder vollständig automatischen Kommissionieren von Gebinden eines oder mehrerer Artikel, insbesondere Getränkeartikel, bereit, umfassend die Schritte: Empfangen mehrerer Kommissionieraufträge zum Erstellen je einer oder mehrerer Zieleinheiten, die einen Zielträger und Zielgebinde eines oder mehrerer Artikel umfassen, Bereitstellen mehrerer Quelleinheiten, die je einen Quellträger und Quellgebinde eines vorherbestimmten Artikels umfassen, für jeden der Kommissionieraufträge und jede der Quelleinheiten automatisches Bestimmen, ob die Quelleinheit basierend auf einem Kommissionierauftrag zum negativen Kommissionieren geeignet ist und, wenn die Quelleinheit zum negativen Kommissionieren geeignet ist, Verwenden der Quelleinheit als Zieleinheit für den Kommissionierauftrag, für den die kleinste Restmenge bestimmt wird.

Alternativ oder zusätzlich zur kleinsten Restmenge kann auch ein zweites vorherbestimmtes Kriterium verwendet werden, um, wenn eine Quelleinheit für mehrere Kommissionieraufträge zum negativen Kommissionieren geeignet ist, einen Kommissionierauftrag auszuwählen. Mit anderen Worten kann die Quelleinheit für jenen Kommissionierauftrag als Zieleinheit verwendet werden, für den die kleinste Restmenge bestimmt wird und/oder der das zweite vorherbestimmte Kriterium erfüllt.

Das Verfahren kann außerdem ein Einbringen der nicht für die Zieleinheit verwendeten Gebinde der Quelleinheit in einen Gebindespeicher umfassen. Mit anderen Worten können die Gebinde der Restmenge in einen Gebindespeicher eingebracht werden.

Alternativ oder zusätzlich können die nicht für die Zieleinheit verwendeten Gebinde der Quelleinheit auf einem Träger angeordnet werden. Insbesondere kann der ursprüngliche Zielträger als neuer Quellträger verwendet werden. Mit anderen Worten kann ein ursprünglich als Zielträger vorgesehener Träger als neuer Quellträger für die von der Quelleinheit abkommissionierten Gebinde verwendet werden.

Das Verfahren kann außerdem ein automatisches Feststellen umfassen, ob die nicht für die Zieleinheit verwendeten Gebinde vollständig oder teilweise zum Erstellen einer weiteren Zieleinheit verwendet werden können. Damit kann der Kommissionierprozess weiter optimiert werden. Insbesondere kann der Kommissionierprozess basierend auf den Restmengen optimiert werden. So können mehrere Kommissionieraufträge empfangen und mehrerer Quelleinheiten bereitgestellt werden, wobei die Kommissionieraufträge, insbesondere in einer Abfolge, basierend auf den bestimmten Restmengen bearbeitet werden.

Die oben beschriebenen Schritte können automatisch ausgeführt werden. Mit anderen Worten können die Schritte des Verfahrens vollständig oder teilweise durch ein Steuerungselement, insbesondere ein Softwaremodul, durchgeführt werden.

Die Erfindung stellt außerdem ein Computerprogrammprodukt gemäß Anspruch 12 bereit, umfassend ein oder mehrere computerlesbare Medien mit von einem Computer ausführbaren Instruktionen, um, wenn diese auf einem Computer ausgeführt werden, die Schritte eines der oben beschriebenen Verfahren durchzuführen.

Die Erfindung stellt außerdem eine Vorrichtung zum teilweise oder vollständig automatisierten Kommissionieren von Gebinden eines oder mehrerer Artikel, insbesondere Getränkeartikel, gemäß Anspruch 13 bereit, umfassend ein Steuerungselement, das konfiguriert ist, eines der oben beschriebenen Verfahren durchzuführen.

Die Vorrichtung kann einer teilweise oder vollständig automatisierten Kommissionieranlage entsprechen oder Teil einer vollständig oder teilweise automatisierten Kommissionieranlage sein.

Die Vorrichtung kann insbesondere eine Bereitstellfläche zum Bereitstellen wenigstens einer Quelleinheit, einen Gebindespeicher, wenigstens ein Förderelement, eine Sequenzbildeeinrichtung zum Bilden einer Gebindesequenz basierend auf einem Kommissionierauftrages und/oder eine Zielfläche zum Anordnen einer Zieleinheit umfassen.

Die Bereitstellfläche und die Zielfläche können über eine Transportstrecke miteinander verbunden sein, insbesondere wobei die Transportstrecke einen Stetigförderer, beispielsweise ein Förderband, umfasst.

Weitere Merkmale und Vorteile werden nachfolgend anhand der beispielhaften Figuren erläutert. Dabei zeigt
- Figur 1: eine Illustration einer beispielhaften Vorrichtung zum teilweise oder vollständig automatischen Kommissionieren von Gebinden; und
- Figur 2: eine Illustration eines beispielhaften Verfahrens zum teilweise oder vollständig automatischen Kommissionieren von Gebinden.

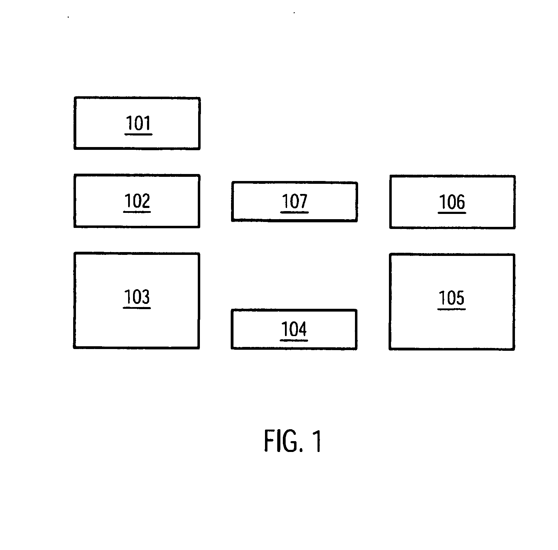

Figur 1 illustriert ein beispielhaftes System umfassend einen externen Lagerbereich 101, in dem artikelreine Quelleinheiten gelagert werden. Diese Quelleinheiten werden als Nachschub in die Kommissionieranlage gebracht. Im beispielhaften System der Figur 1 ist ein Bereitstellungsbereich 102 gezeigt, in dem eine oder mehrere Quelleinheiten für die Entnahme der darauf angeordneten Gebinde angeordnet werden können.

Eine Möglichkeit ist es, die Quelleinheiten durch Fördermittel in den Bereich 102 zu transportieren. Eine weitere Möglichkeit ist es, die Quelleinheiten in einzelne oder in Verbände von Gebinden zu teilen und diese in den Bereitstellungsbereich 102 zu transportieren. Für diese Möglichkeit werden die Gebinde oder Verbände von Gebinden zum Einen transportiert und zum Anderen bis zu einer Übertragung auf eine Zieleinheit gepuffert. Die Übertragung der Gebinde kann in einem oder mehreren Schritten mit einzelnen oder Verbänden von Gebinden erfolgen. Dabei können die Verbände von Gebinden als Säulen, Lagen oder Teilmengen davon ausgebildet sein.

Figur 1 zeigt außerdem einen beispielhaften Gebindespeicher 103, welcher dem Speichern und/oder Zwischenspeichern von Gebinden dient. Die im Gebindespeicher 103 gespeicherten Gebinde können beispielsweise über ein Förderelement 104 zu einer Sequenzbildeeinrichtung 105 transportiert werden, welche Teilmengen von Gebinden unterschiedlicher Artikel zusammenstellt und auf einer Zieleinheit anordnet. Die Zieleinheit kann in einem Zielbereich 106 angeordnet sein.

Der Bereitstellungsbereich 102 für eine oder mehrerer Quelleinheiten und der Zielbereich 106 für eine oder mehrere Zieleinheiten sind über eine Transportstrecke 107 miteinander verbunden. Dadurch kann, wenn eine Quelleinheit als Zieleinheit verwendet werden soll, eine im Bereitstellungsbereich 102 angeordnete Quelleinheit in den Zielbereich 106, insbesondere automatisch, verbracht werden.

Die Förderstrecken 104 und/oder 107 können einem Stetigförderer, insbesondere einem Förderband, einem Kettenförderer, einem Rollenförderer, einem Mattenförderer oder auch einem Handlingssystem, insbesondere einem Portal- oder Industrieroboter oder automatisiertem Transportsystem, entsprechen.

Die Quelleinheiten können aus dem Lagerbereich 101 zur negativen Kommissionierung in den automatisierten Kommissionierprozess verbracht werden. Mit anderen Worten kann nach Entnahme der überschüssigen Gebinde von der Quelleinheit diese zur Zieleinheit werden. Dieses Verfahren reduziert Aufwand und Zeiteinsatz für die Übertragung von Gebinden auf Zieleinheiten. Zudem können die dabei entnommenen Gebinde einzeln oder in Verbänden von Gebinden zur Erstellung anderer Zieleinheiten verwendet werden. Die entnommenen Gebinde können insbesondere im Gebindespeicher 103 gespeichert werden.

Die eine oder mehreren Quelleinheiten, die vom Bereitstellungsbereich 102 zu dem Zielbereich 106 verbracht werden, können im Zielbereich 106 durch die Sequenzbildeeinrichtung 105 um Gebinde oder Verbände von Gebinden ergänzt und/oder komplettiert werden.

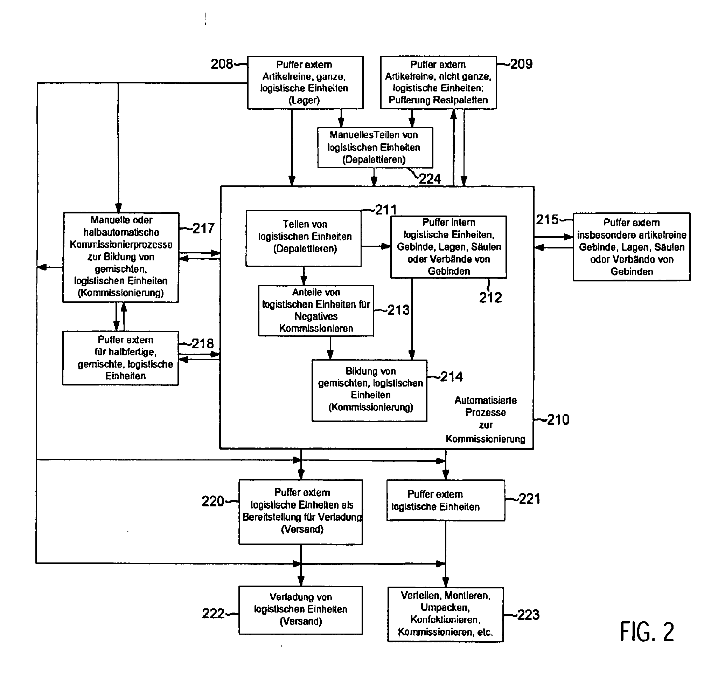

Figur 2 zeigt eine Illustration eines beispielhaften Verfahrens zum teilweise oder vollständig automatischen Kommissionieren von Gebinden als Fließschema. Der zentrale Teil des Fließschemas wird durch die automatisierten Prozesse 210 zur Kommissionierung gebildet. Diese automatisierten Prozesse 210 können beispielsweise durch eine vollautomatische Kommissionieranlage durchgeführt werden. Um diesen zentralen Teil herum sind weitere Verfahrensschritte illustriert, welche manuell oder wenigstens halbautomatisch durchgeführt werden.

In einem externen Puffer oder Lager können artikelreine, logistische Einheiten als Quelleinheiten angeordnet oder bereitgestellt sein 208, 209. Ein Steuerungselement kann für jede der Quelleinheiten, basierend auf einem oder mehreren Kommissionieraufträgen, bestimmen, ob die Quelleinheit zum negativen Kommissionieren geeignet ist. Wenn die Quellpalette zum negativen Kommissionieren geeignet befunden wurde, wird sie den automatisierten Prozessen 210 der Kommissionierung zugeführt, insbesondere wobei die Quellpalette automatisch depalettiert wird 211. Alternativ kann eine Quellpalette aus dem externen Puffer 208 auch erst in die Kommissionieranlage gebracht werden und dann mittels eines Steuerelements automatisch überprüft werden.

Die entnommenen Gebinde werden in einem internen Puffer, beispielsweise einem Gebindespeicher, gespeichert 212. Alternativ oder zusätzlich können die entnommenen Gebinde auch in einem externen Puffer gespeichert oder zwischengespeichert werden 209 bzw. 215.

Quelleinheiten können auch manuell depalettiert 224 und den automatisierten Prozessen 210 der Kommissionierung zugeführt werden.

Wenn die Quelleinheit zum negativen Kommissionieren geeignet ist, wird die Quelleinheit als Zieleinheit verwendet 213, wobei weitere Gebinde unterschiedlicher Artikel auf der Zieleinheit angeordnet werden können 214.

Wenn die Quelleinheit nicht zum negativen Kommissionieren geeignet ist wird sie entweder im externen Puffer belassen oder zum Kommissionieren einer Zieleinheit ganz oder anteilig depalettiert, d.h. die Quellgebinde in einen Gebindespeicher geladen. Quellgebinde die nicht in einen Gebindespeicher verbracht werden, werden extern als Restpaletten 209 oder als einzelne Gebinde oder Verbände von Gebinden 215 gepuffert.

Zwischenzeitlich können Zieleinheiten, welche noch nicht vollständig gebildet sind, auch in einem externen Puffer oder Lager zwischengespeichert werden und danach zur Fertigstellung wieder dem automatisierten Prozess zugeführt werden 218.

Quelleinheiten können auch manuellen oder halbautomatischen Kommissionierprozessen 217 zugeführt werden. Dabei können beispielsweise halbfertige Zieleinheiten gebildet werden 218, die dann den automatisierten Prozessen 210 zugeführt werden. Auch können von den automatisierten Prozessen 210 gebildete Zieleinheiten manuellen oder halbautomatischen Kommissionierprozessen 217 zugeführt werden.

Die durch manuelle oder halbautomatische Kommissionierprozesse 217 oder durch automatische Kommissionierprozesse 214 fertig gestellten Zieleinheiten werden entweder in einen externen Puffer 220, 221 oder in den Versand 222 verbracht oder zur Unterstützung weiterer interner wie externer Geschäftsprozesse, insbesondere Verteilen, Montieren, Umpacken, Konfektionieren, Kommissionieren, etc., 223, eingesetzt. Die in einen externen Puffer 220, 221 vorgehalten, fertig gestellten Zieleinheiten werden bei Bedarf in den Versand 222 verbracht oder zur Unterstützung weiterer interner wie externer Geschäftsprozesse, insbesondere Verteilen, Montieren, Umpacken, Konfektionieren, Kommissionieren, etc., 223, eingesetzt.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Verfahren zum teilweise oder vollständig automatischen Kommissionieren von Gebinden eines oder mehrerer Artikel, insbesondere Getränkeartikel, umfassend die Schritte:
Empfangen eines Kommissionierauftrags zum Erstellen einer Zieleinheit, die einen Zielträger und Zielgebinde eines oder mehrerer Artikel umfasst; und
Bereitstellen einer Quelleinheit, die einen Quellträger und Quellgebinde eines vorherbestimmten Artikels umfasst;
**gekennzeichnet durch**
automatisches Bestimmen basierend auf dem Kommissionierauftrag, ob die Quelleinheit zum negativen Kommissionieren geeignet ist, und
wenn die Quelleinheit zum negativen Kommissionieren geeignet ist, Verwenden der Quelleinheit als Zieleinheit, umfassend negatives Kommissionieren der Quelleinheit;
wobei negatives Kommissionieren der Quelleinheit umfasst: Entladen der Quelleinheit, sodass die Anzahl der auf der Quelleinheit verbleibenden Gebinde des vorherbestimmten Artikels der Bestellmenge der Gebinde des vorherbestimmten Artikels gemäß dem Kommissionierauftrag entspricht.

2. Verfahren nach Anspruch 1, wobei das automatische Bestimmen ein Bestimmen einer Restmenge umfasst, wobei die Restmenge der Differenz zwischen der Anzahl der Quellgebinde und der durch den Kommissionierauftrag bestellten Anzahl an Gebinden des vorherbestimmten Artikels entspricht.

3. Verfahren nach Anspruch 2, wobei die Quelleinheit zum negativen Kommissionieren geeignet ist, wenn die Restmenge kleiner ist als ein vorherbestimmter Bruchteil der Anzahl der Quellgebinde der Quelleinheit.

4. Verfahren nach einem der Ansprüche 2 - 3, wobei Verwenden der Quelleinheit als Zieleinheit umfasst:
Entnehmen der Restmenge von der Quelleinheit; und
Verwenden des Quellträgers als Zielträger und Verwenden der nach dem Entnehmen der Restmenge verbleibenden Quellgebinde als Zielgebinde.

5. Verfahren nach einem der vorangegangenen Ansprüche, wobei mehrere Kommissionieraufträge empfangen werden, und wobei der Schritt des automatischen Bestimmens für jeden Kommissionierauftrag durchgeführt wird.

6. Verfahren nach Anspruch 5, wobei die mehreren empfangenen Kommissionieraufträge einem vorherbestimmten Zeitraum zugeordnet sind.

7. Verfahren nach Anspruch 5 oder 6, außerdem umfassend Bestimmen des Kommissionierauftrags mit der kleinsten Restmenge, insbesondere wobei die Quelleinheit für den Kommissionierauftrags mit der kleinsten Restmenge als Zieleinheit verwendet wird.

8. Verfahren nach einem der vorangegangenen Ansprüche, wobei mehrere Quelleinheiten bereitgestellt werden, und wobei der Schritt des automatischen Bestimmens für jede Quelleinheit durchgeführt wird.

9. Verfahren nach Anspruch 8, wobei jene Quelleinheit für den Kommissionierauftrag als Zieleinheit verwendet wird, die für den Kommissionierauftrag die kleinste Restmenge aufweist.

10. Verfahren nach einem der vorangegangenen Ansprüche, außerdem umfassend Einbringen der nicht für die Zieleinheit verwendeten Gebinde in einen Gebindespeicher (103).

11. Verfahren nach einem der vorangegangenen Ansprüche, umfassend Feststellen, ob die nicht für die Zieteinheit verwendeten Gebinde vollständig oder teilweise zum Erstellen einer weiteren Zieleinheit verwendet werden können.

12. Computerprogrammprodukt, umfassend ein oder mehrere computerlesbare Medien mit von einem Computer ausführbaren Instruktionen, um die Schritte eines Verfahrens nach einem der vorangegangenen Ansprüche durchzuführen, wenn diese Instruktionen auf einem Computer ausgeführt werden.

13. Vorrichtung zum teilweise oder vollständig automatischen Kommissionieren von Gebinden eines oder mehrerer Artikel, insbesondere Getränkeartikel, umfassend ein Steuerungselement, das konfiguriert ist, das Verfahren nach einem der Ansprüche 1 - 11 durchzuführen.

14. Vorrichtung nach Anspruch 13, außerdem umfassend einen Bereitstellungsbereich (102) für eine oder mehrere Quelleinheiten und einen Zielbereich (106) für eine oder mehrere Zieleinheiten, wobei der Bereitstellungsbereich (102) und der Zielbereich (106) über eine Transportstrecke (107) miteinander verbunden sind.

## Claims

1. Method for partially or completely automatic commissioning of packs of one or more article(s), in particular beverage articles, comprising the steps of:
receiving a commissioning order for preparing a target unit which comprises a target carrier and target packs of one or more article(s), and
providing a source unit which comprises a source carrier and source packs of a predetermined article,
**characterised by**
automatic determination based on the commissioning order as to whether the source unit is suitable for negative commissioning, and
if the source unit is suitable for negative commissioning, use of the source unit as the target unit, comprising negative commissioning of the source unit,
wherein negative commissioning of the source unit comprises: unloading the source unit, so the number of packs of the predetermined article remaining on the source unit matches the order quantity of the packs of the predetermined article in accordance with the commissioning order.

2. Method according to claim 1, wherein automatic determination include determination of a remaining quantity, wherein the remaining quantity matches the difference between the number of source packs and the number of packs of the predetermined article ordered by the commissioning order.

3. Method according to claim 2, wherein the source unit is suitable for negative commissioning if the remaining quantity is less than a predetermined fraction of the number of source packs of the source unit.

4. Method according to any one of claims 2-3, wherein use of the source unit as the target unit includes:
removing the remaining quantity from the source unit, and
using the source carrier as the target carrier and using the source packs remaining following removal of the remaining quantity as the target packs.

5. Method according to any one of the preceding claims, wherein several commissioning orders are received, and wherein the step of automatic determination is carried out for each commissioning order.

6. Method according to claim 5, wherein the several received commissioning orders are associated with a predetermined period.

7. Method as claimed in claim 5 or 6, also comprising determining the commissioning order with the smallest remaining quantity, in particular wherein the source unit is used as the target unit for the commissioning order with the smallest remaining quantity.

8. Method according to any one of the preceding claims, wherein several source units are provided, and wherein the step of automatic determination is carried out for each source unit.

9. Method according to claim 8, wherein the source unit which has the smallest remaining quantity for the commissioning order is used as the target unit for the commissioning order.

10. Method according to any one of the preceding claims, also comprising introducing the packs not used for the target unit into a pack storage (103).

11. Method according to any one of the preceding claims, comprising determining whether the packs not used for the target unit can be completely or partially used to create an additional target unit.

12. Computer program product, comprising one or more computer-readable media with instructions which can be executed by a computer in order to carry out the steps of a method according to any one of the preceding claims if these instructions are executed on a computer.

13. Device for partially or completely automatically commissioning packs of one or more article(s), in particular beverage articles, comprising a control element which is configured to carry out the method according to any one of claims 1 - 11.

14. Device according to claim 13, also comprising a pick-up area (102) for one or more source unit(s) and a target area (106) for one or more target unit(s), wherein the pick-up area (102) and the target area (106) are connected with each other via a transport section (107).

## Revendications

1. Procédé pour la préparation partiellement ou entièrement automatique de commandes de colis d'un ou plusieurs articles, en particulier des boissons, comprenant les étapes qui consistent :
à recevoir un ordre de préparation de commande pour établir une unité cible qui comprend un support cible et des colis cibles d'un ou plusieurs articles ; et
à préparer une unité source qui comprend un support source et des colis sources d'un article défini préalablement ;
**caractérisé par** l'étape qui consiste à définir automatiquement, sur la base de l'ordre de préparation de commande, si l'unité source convient pour la préparation de commande négative et,
si l'unité source convient pour la préparation de commande négative, à utiliser ladite unité source comme unité cible, avec une préparation de commande négative de l'unité source,
étant précisé que la préparation de commande négative de l'unité source comprend :
le déchargement de ladite unité source de telle sorte que le nombre de colis de l'article défini préalablement qui restent sur l'unité source corresponde à la quantité commandée de colis dudit article défini préalablement, selon l'ordre de préparation de commande.

2. Procédé selon la revendication 1, étant précisé que la définition automatique comprend une définition d'une quantité restante, étant précisé que ladite quantité restante correspond à la différence entre le nombre de colis sources et le nombre, commandé par l'ordre de préparation de commande, de colis de l'article prédéfini préalablement.

3. Procédé selon la revendication 2, étant précisé que l'unité source convient pour la préparation de commande négative si la quantité restante est inférieure à une
fraction définie préalablement du nombre de colis sources de l'unité source.

4. Procédé selon l'une des revendications 2 à 3, étant précisé que l'utilisation de l'unité source comme unité cible comprend :
le prélèvement de la quantité restante dans l'unité source ; et
l'utilisation du support source comme support cible et l'utilisation des colis sources restant après le prélèvement de ladite quantité restante, comme colis cibles.

5. Procédé selon l'une des revendications précédentes, étant précisé que plusieurs ordres de préparation de commande sont reçus et que l'étape de la définition automatique est effectuée pour chaque ordre de préparation de commande.

6. Procédé selon la revendication 5, étant précisé que les ordres de préparation de commande reçus sont affectés à un laps de temps défini préalablement.

7. Procédé selon la revendication 5 ou 6, comprenant en outre l'étape qui consiste à définir l'ordre de préparation de commande avec la plus petite quantité restante, étant précisé en particulier que l'unité source pour l'ordre de préparation de commande avec la plus petite quantité restante est utilisée comme unité cible.

8. Procédé selon l'une des revendications précédentes, étant précisé que plusieurs unités sources sont préparées et que l'étape de définition automatique est réalisée pour chaque unité source.

9. Procédé selon la revendication 8, étant précisé que l'unité source pour l'ordre de préparation de commande qui est utilisée comme unité cible est celle qui présente pour cet ordre la plus petite quantité restante.

10. Procédé selon l'une des revendications précédentes, comprenant en outre l'étape qui consiste à amener dans un entrepôt de colis (103) les colis qui ne sont pas utilisés pour l'unité cible.

11. Procédé selon l'une des revendications précédentes, comprenant l'étape qui consiste à voir si les colis qui ne sont pas utilisés pour l'unité cible peuvent être utilisés entièrement ou partiellement pour établir une autre unité cible.

12. Produit de programme informatique comprenant un ou plusieurs supports lisibles par ordinateur avec des instructions exécutables par un ordinateur, pour réaliser les étapes d'un procédé selon l'une des revendications précédentes si ces instructions sont exécutées sur un ordinateur.

13. Dispositif pour la préparation partiellement ou entièrement automatique de commandes de colis d'un ou plusieurs articles, en particulier de boissons, comprenant un élément de commande qui est configuré pour mettre en oeuvre le procédé selon l'une des revendications 1 à 11.

14. Dispositif selon la revendication 13, comprenant en outre une zone de préparation (102) pour une ou plusieurs unités sources, et une zone cible (106) pour une ou plusieurs unités cibles, étant précisé que la zone de préparation (102) et la zone cible (106) sont reliées entre elles par une voie de transport (107).
